# FASCICULE DE BREVET EUROPEEN

(11) **EP 3 867 557 B1**
(45) Date de publication et mention de la délivrance du brevet: **01.10.2025**
(21) Numéro de dépôt: 19786634.6
(22) Date de dépôt: 18.10.2019
(51) Int. Cl.: F16L 41/14, F16L 41/08

(54) **ENSEMBLE COMPRENANT UNE CANALISATION ET UN DISPOSITIF DE RACCORDEMENT POUR REALISER LE PIQUAGE D'UN TUBE SUR UNE PAROI DE LA CANALISATION**
ANORDNUNG MIT EINER ROHRLEITUNG UND EINER VERBINDUNGSVORRICHTUNG ZUM VERBINDEN EINES ROHRES MIT EINER WAND DER ROHRLEITUNG
ASSEMBLY COMPRISING A PIPE AND A CONNECTION DEVICE FOR TAPPING A TUBE ON A WALL OF THE PIPE

(30) Priorité: 19.10.2018 FR 1859702
(43) Date de publication de la demande: 25.08.2021
(73) Titulaire: Parker Hannifin EMEA S.à.r.l., 1163 Etoy (CH)
(72) Inventeur: LE QUERE, Philippe, 35830 Betton (FR)
(74) Mandataire: Cabinet Boettcher
(86) Numéro de dépôt international: PCT/EP2019/078400
(87) Numéro de publication internationale: WO 2020/079237

(56) Documents cités:
- WO-A1-99/20930
- GB-A- 1 269 499
- US-A- 5 957 505

## Description

La présente invention concerne le domaine du transport de fluides et plus particulièrement un ensemble comprenant une canalisation et un dispositif de raccordement pour réaliser le piquage d'un tube sur une paroi de la canalisation.

### ARRIERE PLAN DE L'INVENTION

Pour réaliser le piquage d'un tube sur une paroi de canalisation destinée à transporter un fluide sous pression, il est connu de percer ladite paroi et d'y installer une bride de dérivation.

Une bride de dérivation comprend généralement deux demi-coquilles articulées entre elles et agencées pour entourer et serrer la portion de canalisation percée. La bride est maintenue en état monté par des vis liant les extrémités libres des deux demi-coquilles de façon à ce que les dites demi-coquilles épousent au moins en partie le pourtour de la portion de canalisation percée.

L'une des deux demi-coquilles comporte un canal dont une extrémité est agencée pour être en regard du perçage de la canalisation, l'autre extrémité étant conformée pour être raccordée à un orifice du tube. Un joint d'étanchéité assure l'étanchéité entre la canalisation et la bride de dérivation.

Pour résister aux forces de serrage, une telle bride de dérivation est généralement réalisée par moulage en bronze, en fonte ou en laiton. La bride de dérivation s'avère alors coûteuse et surtout particulièrement volumineuse, ce qui rend difficile voire impossible son utilisation sur un collecteur présentant de multiples sorties relativement proches les unes des autres, et cela d'autant plus lorsque lesdites sorties sont alignées ou bien encore en regard les unes des autres.

Le document GB1269499A divulgue un raccord pour connecter un tuyau secondaire à un tuyau principal ayant un trou dans sa paroi pour communiquer avec le tuyau secondaire. Le raccord comprend un élément de selle et un élément d'emboîtement qui sont adaptés pour être montés sur le tuyau principal depuis l'extérieur de ce dernier de sorte que l'élément d'emboîtement s'étende dans le tuyau principal et à l'intérieur de l'élément de selle. L'élément à emboîtement comprend des parties de bride faisant saillie vers l'extérieur qui sont adaptées pour s'engager à l'intérieur du tuyau principal mais qui peuvent être déplacées vers l'intérieur en direction de l'axe de l'élément à emboîtement pour permettre leur passage à travers ledit trou dans le tuyau principal pendant le montage de l'élément à emboîtement. Le connecteur comprend un élément de maintien dont le serrage attire les parties de bride et l'élément de selle axialement l'un vers l'autre et contre la paroi du tuyau principal de manière à former un joint entre le connecteur et le tuyau principal.

### OBJET DE L'INVENTION

L'invention a donc pour but de proposer un ensemble comprenant un dispositif de raccordement permettant d'obvier au moins en partie aux problèmes précités.

### RESUME DE L'INVENTION

A cet effet, l'invention propose un ensemble selon la revendication 1.

L'ensemble comprend une canalisation et un dispositif de raccordement pour réaliser le piquage d'un tube sur une paroi de la canalisation pourvue d'un trou. Le dispositif comprend :
- un corps tubulaire ayant une première portion d'extrémité filetée et une deuxième portion d'extrémité pourvue d'au moins un épaulement s'étendant sensiblement radialement,
- une bague d'étanchéité qui a une surface frontale s'étendant en regard de l'épaulement et qui est montée sur le corps tubulaire pour coulisser axialement le long dudit corps entre une première position dans laquelle la surface frontale est rapprochée de l'épaulement et une deuxième position dans laquelle la surface frontale est écartée de l'épaulement, la deuxième portion d'extrémité et l'épaulement étant agencés pour être insérés dans le trou par un mouvement de basculement sans subir de déformation et la bague d'étanchéité étant pourvue de moyens de centrage par rapport audit trou,
- un élément de raccord délimitant un canal ayant une extrémité dans laquelle est destiné à être assujetti de manière étanche le tube, l'autre extrémité étant conformée pour être vissée sur la portion d'extrémité filetée du corps tubulaire et repousser la bague d'étanchéité en position rapprochée de manière à serrer la paroi entre la surface frontale et l'épaulement.

Le dispositif de raccordement d'un tel ensemble n'entoure donc pas la paroi de canalisation. L'encombrement dudit dispositif est alors limité, ce qui permet de réduire l'espace minimum requis entre deux piquages, mais aussi de rendre possible l'implantation de deux piquages en regard l'un de l'autre.

Selon une caractéristique particulière, la bague d'étanchéité présente un épaulement en saillie duquel s'étend un col de diamètre légèrement inférieur à celui du trou pratiqué dans la canalisation permettant le centrage de la bague par rapport audit trou.

Selon une autre caractéristique particulière, le dispositif de raccordement comprend des moyens de liaison en rotation du corps tubulaire et de la bague d'étanchéité.

Avantageusement alors, le corps tubulaire comprend une rainure axiale agencée pour recevoir une nervure de la bague d'étanchéité, la rainure et la nervure formant les moyens de liaison en rotation.

Selon une autre caractéristique particulière, la bague d'étanchéité est munie de moyens d'anti-rotation avec la canalisation.

De manière particulière, la bague d'étanchéité comprend une première collerette annulaire conformée pour épouser le galbe de la canalisation

De manière particulière, la bague d'étanchéité comprend une première collerette annulaire déformable destinée à épouser le galbe de la canalisation.

De manière particulière, la première collerette annulaire reçoit un premier joint d'étanchéité assurant l'étanchéité entre la bague d'étanchéité et la canalisation.

Avantageusement alors, la première collerette annulaire comporte au moins un relief permettant de retenir le premier joint dans ladite première collerette.

Selon une autre caractéristique particulière, la bague d'étanchéité comprend une deuxième collerette annulaire dans laquelle est agencé un deuxième joint d'étanchéité pour assurer l'étanchéité entre la bague d'étanchéité et l'élément de raccord.

Selon une autre caractéristique particulière, l'épaulement est formé par des ergots conformés pour épouser la forme intérieure de la paroi.

Selon une autre caractéristique particulière, la bague d'étanchéité comprend au moins une lame élastiquement déformable dont une extrémité libre est pourvue d'une dent destinée à se loger dans une gorge radiale du corps tubulaire pour permettre l'introduction et la rétention de la bague d'étanchéité sur le corps tubulaire.

L'invention concerne également un procédé de raccordement d'un tube sur une canalisation, selon la revendication 13.

Le procédé comprend les étapes suivantes :
- introduction de la deuxième portion d'extrémité du corps tubulaire dans un trou pratiqué dans la paroi de la canalisation,
- centrage de la bague d'étanchéité dans ledit trou,
- vissage de l'élément de raccord jusqu'à ce que la paroi de canalisation soit serrée entre l'épaulement du corps tubulaire et la surface frontale de la bague d'étanchéité.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1a est une vue en perspective d'un ensemble selon un mode de réalisation particulier de l'invention, le dispositif étant représenté en éclaté ;
- la figure 1b est une vue analogue à la figure 1a, le dispositif étant représenté en service ;
- la figure 2 est une vue partielle en coupe axiale du dispositif illustré à la figure 1b, illustrant l'introduction de la deuxième portion d'extrémité du corps tubulaire dans le trou pratiqué dans la paroi de la canalisation ;
- la figure 3 est une vue analogue à la figure 1a, dans laquelle les moyens de liaison en rotation du corps tubulaire et de la bague d'étanchéité du dispositif sont visibles ;
- les figures 4a et 4b sont des vues en coupe axiale du dispositif illustré à la figure 1b, respectivement selon le plan A-A et le plan B-B, l'élément de raccordement n'étant pas vissé sur la portion d'extrémité filetée du corps tubulaire ;
- les figures 5a et 5b sont des vues analogues aux figures 4a et 4b, le dispositif étant en service.

### DESCRIPTION DETAILLEE DE L'INVENTION

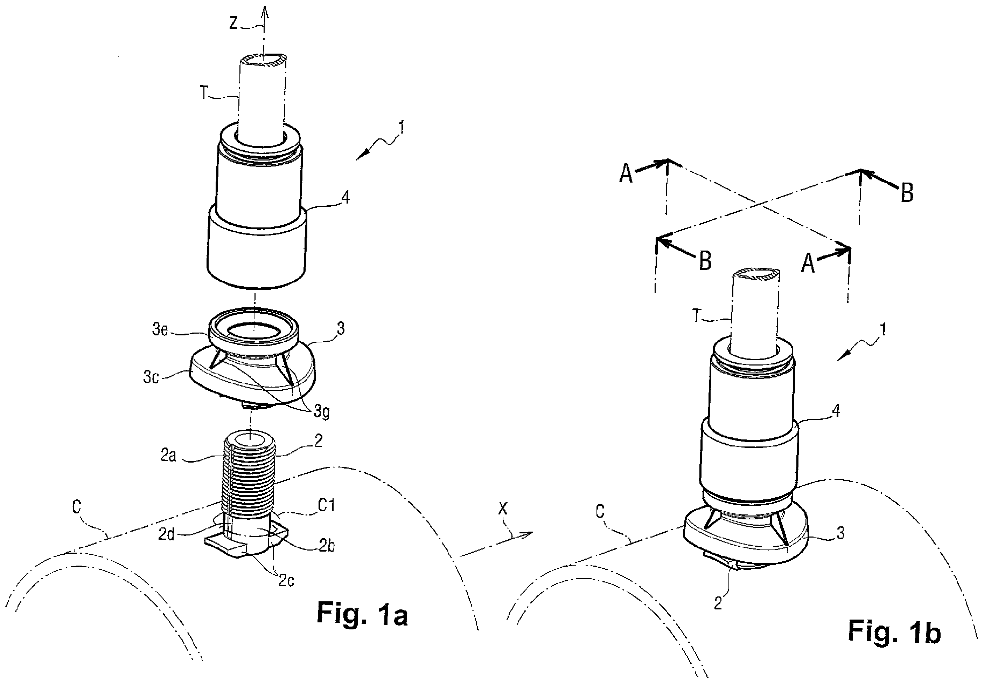

En référence aux figures 1a et 1b, et selon un mode de réalisation particulier de l'invention, le dispositif de raccordement est généralement désigné en 1 et est destiné à réaliser le piquage d'un tube T sur une paroi d'une canalisation C cylindrique pourvue d'un trou C1 de forme circulaire. Le trou C1 s'étend selon un axe Z vertical perpendiculaire à un axe X longitudinal de la canalisation C.

Le dispositif de raccordement 1 comporte un corps tubulaire 2 rigide s'étendant le long de l'axe Z. Le corps tubulaire 2 a une première portion d'extrémité 2a filetée et une deuxième portion d'extrémité 2b pourvue de deux ergots 2c identiques s'étendant sensiblement radialement. Les deux ergots 2c sont diamétralement opposés et s'étendent parallèlement à l'axe longitudinal X de la canalisation C. Ils définissent un écartement (entre leurs extrémités libres) légèrement supérieur au diamètre du trou C1 de la canalisation C permettant l'insertion de la deuxième portion 2b dans ledit trou C1 par un mouvement de basculement. Une surface supérieure des ergots 2c est conformée pour épouser la forme intérieure de la paroi de la canalisation C.

Par ailleurs, le corps tubulaire 2 comprend une rainure 2d axiale partant de la surface supérieure de l'un des deux ergots 2c pour déboucher sur une extrémité libre de la première portion d'extrémité 2a filetée. Le plan B-B défini par les axes X et Z forme un plan de symétrie du corps tubulaire 2.

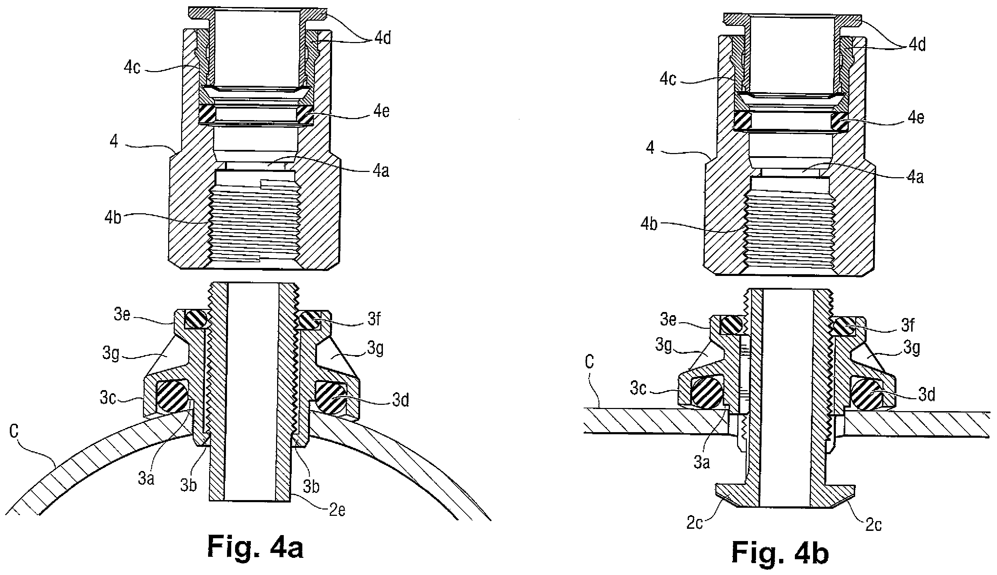

Le dispositif de raccordement 1 comporte également une bague d'étanchéité 3 s'étendant selon l'axe Z et ayant un diamètre intérieur légèrement supérieur au diamètre extérieur de la première portion d'extrémité 2a filetée du corps tubulaire 2. La bague d'étanchéité 3 présente en partie inférieure un épaulement en saillie duquel s'étend un col 3a de diamètre légèrement inférieur à celui du trou C1 pratiqué dans la canalisation C. Le col 3a a pour fonction de permettre le centrage de la bague d'étanchéité 3 par rapport audit trou C1 (figure 4a, 4b). Dans le col 3a ont été formées deux lames 3b élastiquement déformables s'étendant verticalement. Les deux lames 3b sont identiques et définissent entre elles deux logements destinés à recevoir les ergots 2c du corps tubulaire 2. Une surface extérieure des lames 3b assure le centrage de la bague d'étanchéité 3 par rapport audit trou C1. Une extrémité libre des lames 3b est pourvue d'une dent destinée à se loger dans une gorge radiale 2e du corps tubulaire 2.

La bague d'étanchéité 3 comprend également en partie inférieure une première collerette 3c annulaire conformée pour épouser le galbe de la canalisation C. La première collerette 3c reçoit un premier joint 3d et comporte des reliefs 3c' permettant de retenir ledit premier joint 3d dans ladite première collerette 3c.

La bague d'étanchéité 3 comprend en partie supérieure une deuxième collerette 3e annulaire dans laquelle est agencé en force un deuxième joint 3f. La première collerette 3c et la deuxième collerette 3e sont liées entre elles par des reliefs radiaux 3g symétriquement répartis autour de l'axe Z.

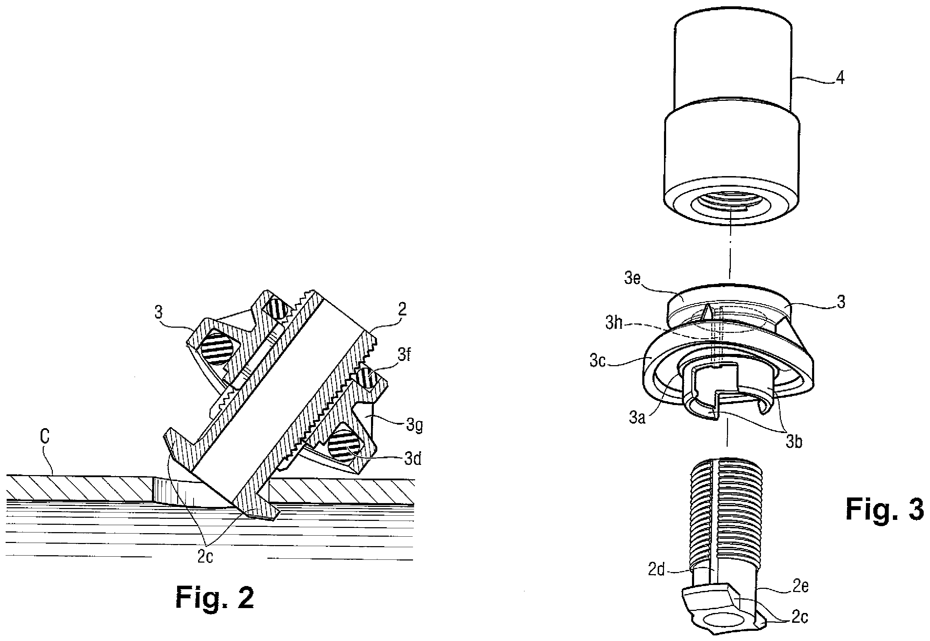

Conformément à la figure 3, la bague d'étanchéité 3 comprend également une nervure 3h axiale intérieure destinée à se loger dans la rainure 2d axiale du corps tubulaire 2 pour former des moyens de liaison en rotation du corps tubulaire 2 et de la bague d'étanchéité 3.

Tout comme pour le corps tubulaire 2, le plan B-B forme un plan de symétrie de la bague d'étanchéité 3.

Le dispositif de raccordement 1 comporte enfin un élément de raccord 4 s'étendant selon l'axe Z et délimitant un canal 4a vertical. Une portion inférieure 4b du canal 4a est conformée pour être vissée sur la première portion d'extrémité 2a filetée du corps tubulaire 2, tandis qu'une portion supérieure 4c du canal 4a est conformée pour recevoir une portion d'extrémité du tube T.

L'élément de raccord 4 comporte des moyens de retenue 4d et un joint d'étanchéité 4e pour assujettir de manière étanche la portion d'extrémité du tube T dans le canal 4a. Les moyens de retenue 4d étant connus en soi, ils ne seront pas plus décrits ici.

Le fonctionnement du dispositif de raccordement 1 va maintenant être détaillé en regard des figures 2, 4a, 4b, 5a et 5b.

La bague d'étanchéité 3 est tout d'abord enfilée sur le corps tubulaire 2 moyennant une déformation des lames 3b le long de la première portion d'extrémité 2a filetée jusqu'à ce que les dents desdites lames 3b se logent dans la gorge radiale 2e du corps tubulaire 2. La bague d'étanchéité 3 peut alors coulisser axialement le long dudit corps tubulaire 2 entre une première position dans laquelle les ergots 2c sont logés entre les lames 3b et une deuxième position dans laquelle les ergots 2c sont éloignés des lames 3b. Dans la première position comme dans la deuxième position, la première portion d'extrémité 2a filetée est en saillie par rapport à la deuxième collerette 3f de la bague d'étanchéité 3.

Conformément à la figure 2, la deuxième portion d'extrémité 2b du corps tubulaire 2 est ensuite insérée dans le trou C1 pratiqué dans la paroi de la canalisation C. Pour cela, le corps tubulaire 2 est incliné et les ergots 2c sont introduits l'un après l'autre dans le trou C1 dans un mouvement de basculement, de sorte que ledit corps tubulaire ne subit aucune déformation lors de son introduction dans le trou C1.

La bague d'étanchéité 3 est alors centrée par rapport au trou C1 à l'aide de la surface extérieure des lames 3b, puis est positionnée sur la paroi de la canalisation C de manière à ce que la première collerette 3c épouse sensiblement le galbe de ladite paroi. Comme illustré aux figures 4a et 4b, le corps tubulaire 2 coulisse alors à travers la bague d'étanchéité 3 jusqu'à rejoindre par gravité la deuxième position, autrement dit la position dans laquelle les ergots 2c du corps tubulaire 2 sont éloignés des lames 3b de la bague d'étanchéité. De par ses dimensions, le premier joint d'étanchéité 3d empêche la première collerette 3c d'être en contact avec la paroi de la canalisation C. La bague d'étanchéité 3 est néanmoins sensiblement liée en rotation à la canalisation C par la forme galbée de la première collerette 3c.

L'élément de raccord 4 est ensuite vissé sur la première portion d'extrémité 2a filetée du corps tubulaire 2. L'initialisation du vissage est facilitée par le fait que la première portion d'extrémité 2a filetée est suffisamment en saillie par rapport à la deuxième collerette 3f de la bague d'étanchéité 3 pour ne pas avoir besoin de faire coulisser le corps tubulaire de la deuxième position vers la première position pour entamer le vissage.

On notera également que la liaison en rotation du corps tubulaire 2 et la bague d'étanchéité 3 réalisée par la rainure 2d et la nervure 3h facilite également le vissage car le blocage de la bague d'étanchéité 3 en rotation permet d'immobiliser en rotation le corps tubulaire 2 pendant le vissage.

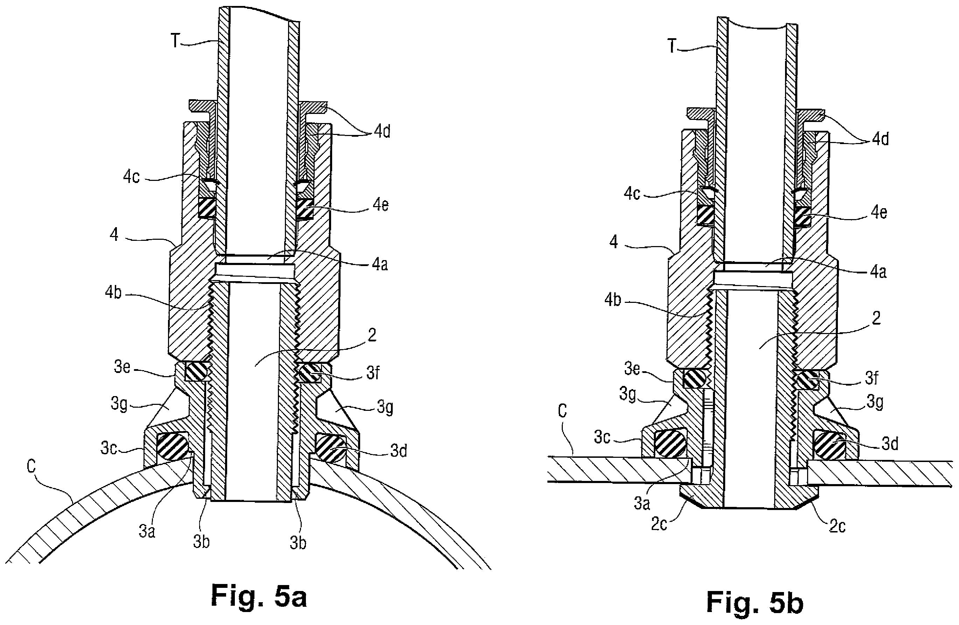

Conformément aux figures 5a et 5b, le vissage de l'élément de raccord 4 sur le corps tubulaire 2 a pour effet de repousser la bague d'étanchéité 3 vers la première position jusqu'à serrer la paroi de la canalisation C entre l'épaulement en saillie duquel s'étend le col 3a de ladite bague d'étanchéité 3 et les ergots 2c dudit corps tubulaire 2. Le premier joint d'étanchéité 3d est alors écrasé contre la paroi de la canalisation C assurant l'étanchéité entre ladite paroi et la bague d'étanchéité 3, la première collerette 3c étant sensiblement en contact avec la paroi de la canalisation C. Par ailleurs, le deuxième joint d'étanchéité 3f est écrasé contre la portion inférieure 4b de l'élément de raccord 4 assurant l'étanchéité entre ledit élément de raccord 4 et la bague d'étanchéité 3.

La portion d'extrémité du tube T est alors insérée dans l'élément de raccord 4 de manière à ce que le tube soit assujetti de manière étanche dans ledit élément de raccord sous l'effet des moyens de retenue 4d et du joint d'étanchéité 4e.

L'invention n'est bien entendu pas limitée à ce qui vient d'être décrit, mais englobe au contraire toute variante entrant dans le cadre défini par les revendications.

Bien qu'ici la première collerette 3c annulaire de la bague d'étanchéité 3 soit conformée pour épouser le galbe de la canalisation C, elle pourrait aussi être déformable et ainsi épouser ledit galbe lors du vissage de l'élément de raccord 4 sur le corps tubulaire 2.

Le matériau composant le corps tubulaire 2 peut être de différentes natures, par exemple en plastique ou en métal, et en particulier en aluminium. De préférence, le matériau composant le corps du tubulaire est de même nature que celui composant la canalisation C.

## Revendications

1. Ensemble comprenant une canalisation (C) et un dispositif de raccordement (1) pour réaliser le piquage d'un tube (T) sur une paroi de la canalisation (C) pourvue d'un trou (C1), le dispositif comprenant :
- un corps tubulaire (2) ayant une première portion d'extrémité (2a) filetée et une deuxième portion d'extrémité (2b) pourvue d'au moins un épaulement (2c) s'étendant sensiblement radialement,
- une bague d'étanchéité (3) qui a une surface frontale s'étendant en regard de l'épaulement et qui est montée sur le corps tubulaire pour coulisser axialement le long dudit corps entre une première position dans laquelle la surface frontale est rapprochée de l'épaulement et une deuxième position dans laquelle la surface frontale est écartée de l'épaulement, la deuxième portion d'extrémité et l'épaulement étant agencés pour être insérés dans le trou par un mouvement de basculement sans subir de déformation et la bague d'étanchéité étant pourvue de moyens de centrage (3a) par rapport audit trou,
- un élément de raccord (4) délimitant un canal (4a) ayant une extrémité dans laquelle est destiné à être assujetti de manière étanche le tube, l'autre extrémité étant conformée pour être vissée sur la portion d'extrémité filetée du corps tubulaire et repousser la bague d'étanchéité en position rapprochée de manière à serrer la paroi entre la surface frontale et l'épaulement.

2. Ensemble selon la revendication 1, dans lequel la bague d'étanchéité (3) présente un épaulement en saillie duquel s'étend un col (3a) de diamètre légèrement inférieur à celui du trou pratiqué dans la canalisation permettant le centrage de la bague par rapport audit trou.

3. Ensemble selon les revendications 1 ou 2, comprenant des moyens de liaison en rotation (2d, 3h) du corps tubulaire (2) et de la bague d'étanchéité (3).

4. Ensemble selon la revendication 3, dans lequel le corps tubulaire (2) comprend une rainure axiale (2d) agencée pour recevoir une nervure (3h) de la bague d'étanchéité (3), la rainure et la nervure formant les moyens de liaison en rotation.

5. Ensemble selon l'une quelconque des revendications précédentes, dans lequel la bague d'étanchéité (3) est munie de moyens d'anti-rotation avec la canalisation (C).

6. Ensemble selon la revendication 5, dans lequel la bague d'étanchéité (3) comprend une première collerette (3c) annulaire conformée pour épouser le galbe de la canalisation (C).

7. Ensemble selon la revendication 5, dans lequel la bague d'étanchéité (3) comprend une première collerette (3c) annulaire déformable destinée à épouser le galbe de la canalisation (C).

8. Ensemble selon les revendications 6 ou 7, dans lequel la première collerette (3c) annulaire reçoit un premier joint d'étanchéité (3d) assurant l'étanchéité entre la bague d'étanchéité (3) et la canalisation (C).

9. Ensemble selon la revendication 8, dans lequel la première collerette (3c) annulaire comporte au moins un relief (3c') permettant de retenir le premier joint (3d) dans ladite première collerette.

10. Ensemble selon l'une quelconque des revendications précédentes, dans lequel la bague d'étanchéité (3) comprend une deuxième collerette annulaire (3e) dans laquelle est agencé un deuxième joint d'étanchéité (3f) pour assurer l'étanchéité entre la bague d'étanchéité (3) et l'élément de raccord (4).

11. Ensemble selon l'une quelconque des revendications précédentes, dans lequel l'épaulement est formé par des ergots (2c) conformés pour épouser la forme intérieure de la paroi.

12. Ensemble selon l'une quelconque des revendications précédentes, dans lequel la bague d'étanchéité (3) comprend au moins une lame (3b) élastiquement déformable dont une extrémité libre est pourvue d'une dent destinée à se loger dans une gorge radiale (2e) du corps tubulaire pour permettre l'introduction et la rétention de la bague d'étanchéité sur le corps tubulaire.

13. Procédé de raccordement d'un tube au moyen d'un ensemble selon l'une quelconque des revendications précédentes, le procédé comprenant les étapes suivantes :
- introduction de la deuxième portion d'extrémité (2b) du corps tubulaire (2) dans un trou (C1) pratiqué dans la paroi de la canalisation (C),
- centrage de la bague d'étanchéité (3) dans ledit trou,
- vissage de l'élément de raccord (4) jusqu'à ce que la paroi de canalisation soit serrée entre l'épaulement du corps tubulaire (2e) et la surface frontale de la bague d'étanchéité.

## Patentansprüche

1. Anordnung, umfassend eine Rohrleitung (C) und eine Anschlussvorrichtung (1) zum Anschließen eines Rohrs (T) an einer Wandung der mit einem Loch (C1) versehenen Rohrleitung (C), wobei die Vorrichtung umfasst:
- einen rohrförmigen Körper (2), der einen ersten, mit einem Gewinde versehenen Endabschnitt (2a) und einen zweiten, mit zumindest einer sich im Wesentlichen radial erstreckenden Schulter (2c) versehenen Endabschnitt (2b) aufweist,
- einen Dichtungsring (3), der eine sich der Schulter gegenüberliegend erstreckende Stirnfläche aufweist, die derart auf dem rohrförmigen Körper angebracht ist, dass sie entlang des Körpers zwischen einer ersten Stellung, in welcher die Stirnfläche an die Schulter angenähert ist, und einer zweiten Stellung, in welcher die Stirnfläche von der Schulter beabstandet ist, axial verschiebbar ist, wobei der zweite Endabschnitt und die Schulter derart ausgelegt sind, dass sie durch eine Kippbewegung ohne Verformung in das Loch einführbar sind und wobei der Dichtungsring mit Zentriermitteln (3a) versehen ist, die zu dessen Zentrierung in Bezug auf das Loch dienen,
- ein Anschlusselement (4), das einen Kanal (4a) begrenzt, an dessen einem Ende das Rohr abdichtend befestigbar ist, wobei das andere Ende derart ausgebildet ist, dass es auf einen mit einem Gewinde versehenen Endabschnitt des rohrförmigen Körpers festschraubbar ist und den Dichtungsring dabei in die angenäherte Stellung schiebt, sodass die Wandung zwischen der Stirnfläche und der Schulter eingespannt wird.

2. Anordnung nach Anspruch 1, wobei der Dichtungsring (3) eine Schulter aufweist, aus der hervorstehend sich ein Hals (3a) erstreckt, der einen etwas geringeren Durchmesser als das in der Rohrleitung ausgebildete Loch aufweist, sodass die Zentrierung des Rings in Bezug auf das Loch ermöglicht wird.

3. Anordnung nach den Ansprüchen 1 oder 2, umfassend Verbindungsmittel (2d, 3h) zur drehfesten Verbindung des rohrförmigen Körpers (2) mit dem Dichtungsring (3).

4. Anordnung nach Anspruch 3, wobei der rohrförmige Körper (2) eine Axialnut (2d) umfasst, die dafür ausgelegt ist, eine Rippe (3h) des Dichtungsrings (3) aufzunehmen, wobei die Nut und die Rippe die Verbindungsmittel zur drehfesten Verbindung bilden.

5. Anordnung nach einem der vorhergehenden Ansprüche, wobei der Dichtungsring (3) mit Drehsicherungsmitteln zur Drehsicherung gegenüber der Rohrleitung (C) ausgestattet ist.

6. Anordnung nach Anspruch 5, wobei der Dichtungsring (3) einen ersten ringförmigen Kragen (3c) umfasst, der dafür ausgebildet ist, sich der Rundung der Rohrleitung (C) anzupassen.

7. Anordnung nach Anspruch 5, wobei der Dichtungsring (3) einen ersten, verformbaren ringförmigen Kragen (3c) umfasst, der dafür bestimmt ist, sich der Rundung der Rohrleitung (C) anzupassen.

8. Anordnung nach den Ansprüchen 6 oder 7, wobei der erste ringförmige Kragen (3c) eine erste Dichtung (3d) aufnimmt, welche die Abdichtung zwischen dem Dichtungsring (3) und der Rohrleitung (C) gewährleistet.

9. Anordnung nach Anspruch 8, wobei der erste ringförmige Kragen (3c) zumindest ein Relief (3c') enthält, das dazu dient, die erste Dichtung (3d) in dem ersten Kragen zu halten.

10. Anordnung nach einem der vorhergehenden Ansprüche, wobei der Dichtungsring (3) einen zweiten ringförmigen Kragen (3e) umfasst, in welchem eine zweite Dichtung (3f) angeordnet ist, welche die Abdichtung zwischen dem Dichtungsring (3) und dem Anschlusselement (4) gewährleistet.

11. Anordnung nach einem der vorhergehenden Ansprüche, wobei die Schulter von Nasen (2c) gebildet ist, die derart ausgebildet sind, dass sie sich der Innenform der Wandung anpassen.

12. Anordnung nach einem der vorhergehenden Ansprüche, wobei der Dichtungsring (3) zumindest eine elastisch verformbare Lamelle (3b) umfasst, von der ein freies Ende mit einem Zahn versehen ist, der dafür bestimmt ist, an einer radialen Kehle (2e) des rohrförmigen Körpers aufgenommen zu werden, damit der Dichtungsring auf den rohrförmigen Körper aufgesetzt und dort zurückgehalten werden kann.

13. Verfahren zum Anschließen eines Rohrs mithilfe einer Anordnung nach einem der vorhergehenden Ansprüche, wobei das Verfahren die Schritte umfasst, dass:
- der zweite Endabschnitt (2b) des rohrförmigen Körpers (2) in ein in der Wandung der Rohrleitung (C) ausgebildetes Loch (C1) eingeführt wird,
- der Dichtungsring (3) in dem Loch zentriert wird,
- das Anschlusselement (4) so weit eingeschraubt wird, bis die Rohrleitungswandung zwischen der Schulter des rohrförmigen Körpers (2e) und der Stirnfläche des Dichtungsrings eingespannt ist.

## Claims

1. Assembly comprising a pipe (C) and a connection device (1) for tapping a tube (T) on a wall of the pipe (C) provided with a hole (C1), the device comprising:
- a tubular body (2) having a first threaded end portion (2a) and a second end portion (2b) provided with at least one shoulder (2c) extending substantially radially,
- a sealing ring (3) which has a front surface extending facing the shoulder and which is mounted on the tubular body so as to slide axially along said body between a first position in which the front surface is brought closer to the shoulder and a second position in which the front surface is moved away from the shoulder, the second end portion and the shoulder being arranged to be inserted into the hole by a tilting movement without undergoing deformation and the sealing ring being provided with means (3a) for centring with respect to said hole,
- a connecting element (4) delimiting a channel (4a) having one end in which the tube is intended to be secured in a sealed manner, the other end being shaped to be screwed onto the threaded end portion of the tubular body and to push back the sealing ring into a closer position so as to clamp the wall between the front surface and the shoulder.

2. Assembly according to claim 1, wherein:
the sealing ring (3) has a projecting shoulder from which extends a neck (3a) with a diameter slightly less than that of the hole made in the pipe allowing the ring to be centred with respect to said hole.

3. Assembly according to claims 1 or 2, comprising rotational connection means (2d, 3h) for rotationally connecting the tubular body (2) and the sealing ring (3).

4. Assembly according to claim 3, wherein the tubular body (2) comprises an axial groove (2d) arranged to receive a rib (3h) of the sealing ring (3), the groove and the rib forming the rotational connection means.

5. Assembly according to any one of the preceding claims, wherein the sealing ring (3) is provided with means for preventing rotation with the pipe (C).

6. Assembly according to claim 5, wherein the sealing ring (3) comprises a first annular flange (3c) shaped to match the curve of the pipe (C).

7. Assembly according to claim 5, wherein the sealing ring (3) comprises a first deformable annular flange (3c) intended to match the curve of the pipe (C).

8. Assembly according to claims 6 or 7, wherein the first annular flange (3c) receives a first seal (3d) ensuring sealing between the sealing ring (3) and the pipe (C).

9. Assembly according to claim 8, wherein the first annular flange (3c) comprises at least one relief (3c') for retaining the first seal (3d) in said first flange.

10. Assembly according to any one of the preceding claims, wherein the sealing ring (3) comprises a second annular flange (3e) in which a second seal (3f) is arranged to ensure sealing between the sealing ring (3) and the connecting element (4).

11. Assembly according to any one of the preceding claims, wherein the shoulder is formed by lugs (2c) shaped to match the inner shape of the wall.

12. Assembly according to any one of the preceding claims, wherein the sealing ring (3) comprises at least one elastically deformable blade (3b), a free end of which is provided with a tooth intended to be housed in a radial groove (2e) of the tubular body to allow the insertion and retention of the sealing ring on the tubular body.

13. Method for connecting a tube by means of an assembly according to any one of the preceding claims, the method comprising the following steps:
- introducing the second end portion (2b) of the tubular body (2) in a hole (C1) made in the wall of the pipe (C),
- centring the sealing ring (3) in said hole,
- screwing the connecting element (4) until the pipe wall is clamped between the shoulder of the tubular body (2e) and the front surface of the sealing ring.
